Europäisches Patentamt

European Patent Office

Office européen des brevets

(11) Veröffentlichungsnummer : **0 134 749**
**B1**

(12) **EUROPÄISCHE PATENTSCHRIFT**

(45) Veröffentlichungstag der Patentschrift :
24.01.90

(51) Int. Cl.⁵ : **F 16 C 27/00**

(21) Anmeldenummer : 84730079.5

(22) Anmeldetag : 24.07.84

(54) Flexible gedämpfte Wellenlageranordnung, insbesondere für elektrische Maschinen.

(30) Priorität : 04.08.83 DE 3328362

(43) Veröffentlichungstag der Anmeldung :
20.03.85 Patentblatt 85/12

(45) Bekanntmachung des Hinweises auf die Patenterteilung : 24.01.90 Patentblatt 90/04

(84) Benannte Vertragsstaaten :
CH DE FR LI SE

(56) Entgegenhaltungen :
DE--A-- 3 129 554
US--A-- 3 357 757
US--A-- 3 994 541
PATENT ABSTRACTS OF JAPAN, Band 7, Nr. 44 (M-
195)[1189], 22. Februar 1983 & JP-A-57192621 ( HITA-
CHI SEISAKUSHO K.K. ) 26.11.82

(73) Patentinhaber : Siemens Aktiengesellschaft
Wittelsbacherplatz 2
D-8000 München 2 (DE)

(72) Erfinder : Utecht, Manfred, Dipl.-Ing.
Janischweg 21d
D-1000 Berlin 13 (DE)

**Beschreibung**

Die Erfindung bezieht sich auf eine flexible gedämpfte Wellenlageranordnung, insbesondere für elektrische Maschinen, mit einem die Welle ringförmig umgebenden Lagergehäuses und einem beweglichen Lagerträger, der das Wellenlager enthält und im Lagergehäuse radial federnd aufgehängt ist, wobei zwischen dem Lagergehäuse und dem Lagerträger eine Ausnehmung für ein Strömungsmitteldruckpolster verbleibt und eine zusätzliche elastische Abstützung vorgesehen ist.

Eine derartige flexible gedämpfte Wellenlageranordnung ist aus den Patentabstracs of Japan JP-A-57-192621 bekannt. Bei dieser bekannten Wellenlageranordnung ist zwischen dem Lager und dem Lagergehäuse ein seitlich offener Spalt vorgesehen, in dem das dem Lager zugeführte Öl ein Strömungmittelpolster bildet. Das Lager ist auf einer Seite durch einen beweglichen Lagerträger gehalten, der aus zwei Ringen, die durch eine Reihe von Biegefedern, z. B. Stäben, miteinander verbunden sind, gebildet ist. Durch die somit gegebene federnde Aufhängung des beweglichen Lagerträgers in Zusammenwirkung mit dem Strömungsmitteldruckpolster wird eine äußere Lagerdämpfung erzielt, die eine Dämpfung der von der Welle ausgehenden Vibrationen, die bei Resonanzfrequenzen auftreten, ergibt. Bei der bekannten Wellenlageranordnung ist außerdem zwischen dem Lagergehäuse und dem Lagerträger auf der anderen Seite eine zusätzliche elastische Abstützung vorgesehen, bestehend aus einer Feder, die von einem Bolzen vorgespannt werden kann. Dadurch ist eine Einstellmöglichkeit zur Veränderung der Lagerelastizität in einem gewissen Toleranzbereich gegeben. Diese zusätzliche Abstützung liegt aber ständig parallel zur federnden Abstützung durch den Lagerträger, so daß sie Teil der primären elastischen Abstützung ist. Wesentlich für die Effektivität der durch die Abstützung gegebenen äußeren Lagerdämpfung ist die optimale Anpassung dieser elastischen Abstützung des Lagerträgers durch die Bemessung der Biegefedern bzw. Einstellung der zusätzlichen Feder an die dynamischen Eigenschaften des Wellenlagerungssystems, das im wesentlichen durch das Betriebsverhalten des gelagerten, mit der Welle verbundenen Maschinenteils bestimmt ist. Bleiben die dynamischen Kennwerte dieses Systems quasi konstant, so ist die Anpassung der elastischen Abstützung unproblematisch, zumal durch die zusätzliche elastische Abstützung eine Änderungsmöglichkeit zur genauen Anpassung zwecks Berücksichtigung möglicher Toleranzen gegeben ist.

Ändern sich dagegen in einer Maschinenanlage bei verschiedenen Betriebszuständen, z. B. durch hydro- oder gasdynamische oder durch magnetische Kräfte, die Kraft- oder Steifigkeitskonstellationen der auf der Welle gelagerten Teile, so bereitet die Anpassung der äußeren Lagerdämpfung Schwierigkeiten. Dies ist insbesondere bei elektrischen Maschinen gegeben, bei denen im Luftspalt ein als negative Feder wirkender einseitiger magnetischer Zug auftreten kann. Dabei ist zwischen statischen magnetischem Zug aus nicht rotierender Exzentrizität und dynamischen magnetischem Zug aus drehfrequent umlaufender Exzentrizität bzw. entsprechenden negativen magnetischen Steifigkeiten zu unterscheiden.

Insbesondere der statische magnetische Restzug aus nicht vermeidbarer statischer Exzentrizität wirkt auf die bekannte äußere Lagerdämpfung sehr ungünstig. Er bewirkt eine zusätzliche statische Auslenkung des Rotors und damit eine Verschiebung des beweglichen Lagerträgers im Strömungsmitteldruckpolster, ungünstigenfalls bis hin zum Anschlag, so daß die Dämpfungswirkung stark reduziert bzw. ganz verloren geht.

Der dynamische magnetische Zug wirkt wie eine negative Wellensteifigkeit und beeinflußt somit die biegekritischen Drehzahlen, die sich folglich für erregten und unerregten Zustand der elektrischen Maschine deutlich unterscheiden. Beide Zustände erfordern dadurch für die optimale Anpassung der äußeren Lagerdämpfung unterschiedliche Steifigkeiten für die Abstützung des Lagerträgers.

Die bekannte äußere Lagerdämpfung müßte dann für den ungünstigeren, den erregten Zustand der elektrischen Maschine, ausgelegt werden. Zwangsläufig wäre dann die Abstimmung für den unerregten Zustand nicht mehr optimal, so daß dann beispielsweise beim Hochlauf oder unerregtem Lauf eines Generators oder beim Auslauf eines Motors unter Umständen unzulässig hohe Schwingungen auftreten würden.

Der Erfindung liegt daher die Aufgabe zugrunde, eine flexible gedämpfte Wellenlageranordnung der eingangs beschriebenen Art so zu gestalten, daß sie für während des Betriebes wechselnde Kraft- und/oder Steifigkeitskonstellationen optimal auslegbar ist.

Zur Lösung dieser Aufgabe weist bei einer flexiblen gedämpften Wellenanordnung gemäß der Erfindung die zusätzliche Abstützung als sekundäre Abstützung im Ruhezustand der gelagerten Maschine ein Spiel zum Lagerträger auf, das kleiner als der mögliche Federweg des Lagerträgers ist und die Ausnehmung für das Strömungsmitteldruckpolster ist mit seitlichen Abdichtungen versehen. Durch die doppelte elastische Abstützung, die zueinander ein Spiel aufweist, das bei bestimmten Betriebszuständen überbrückt wird, erhält man zwei unabhängig voneinander optimierbare elastische Lagerabstützungen, deren Optimierung jeweils einem wichtigen Betiebszustand angepaßt werden kann. Durch die Bemessung des Spiels kann man beeinflussen, wie lange nur die eine elastische Lagerabstützung wirksam ist und wann durch die Parallelschaltung beider eine höhere Steifigkeit und somit eine Veränderung der Lagereigenschaften erzielt wird.

Um auch nachträglich noch eine Anpassung oder eine Veränderung der Eigenschaften der Wellenlageranordnung zu erreichen, ist es zweckmäßig, daß das Spiel zwischen dem beweglichen Lagerteil und der sekundären Abstützung und/oder die Steifigkeit der Sekundärabstützung einstellbar ist.

Im folgenden sei die Erfindung noch anhand der in den Fig. 1 bis 5 dargestellten Ausführungsbeispiel näher erläutert. Die Fig. 1 zeigt einen Teil eines Längsschnitts durch eine flexible gedämpfte Wellenlageranordnung gemäß der Erfindung, Fig. 2 zeigt die entsprechende Seitenansicht. In den Fig. 3, 4 und 5 sind ebenfalls Teile von Längsschnitten von etwas abgewandelten Wellenlageranordnungen dargestellt. In allen Figuren sind für gleiche Teile jeweils die gleichen Bezugszeichen beibehalten.

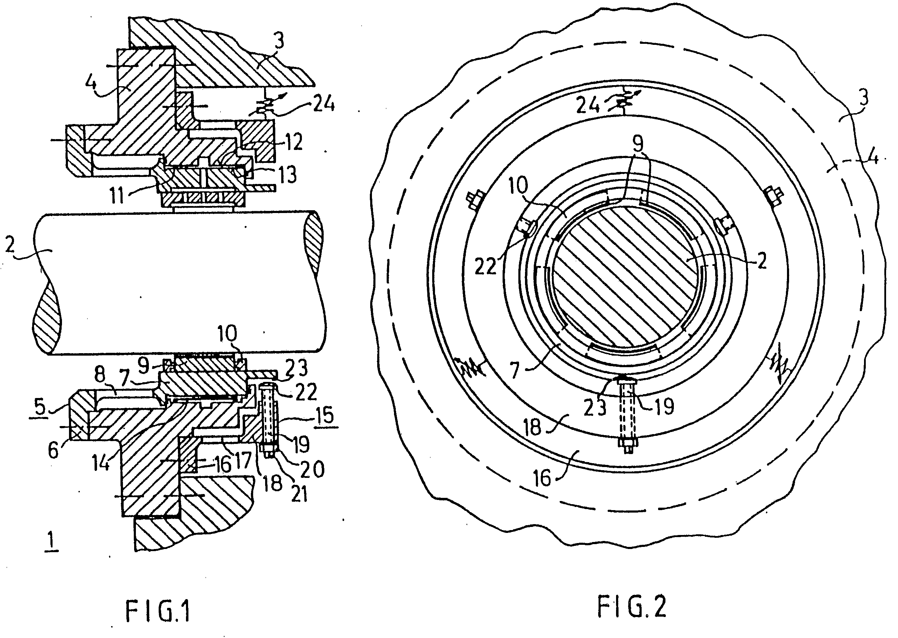

In den Fig. 1 und 2 ist eine flexibel gedampfte Wellenlageranordnung 1 für die horizontale Welle 2 einer elektrischen Maschine dargestellt. Die Wellenlageranordnung 1 besteht aus einem äußeren Lagerbock 3, der sich auf einem Fundament abstützt. Er trägt das Lagergehäuse 4, das ebenso wie der Lagerbock 3 die Welle 2 ringförmig umgibt. Am Lagergehäuse 4 ist ein erster beweglicher Lagerträger 5 radial federnd aufgehängt. Dieser Lagerträger 5 besteht aus zwei Ringen 6 und 7, die untereinander durch federnde Stäbe 8 verbunden sind. Der Ring 6 ist am Lagergehäuse 4 befestigt, der Ring 7 trägt das eigentliche Wellenlager mit den Lagersegmenten 9 welche die Welle 2 gleichmäßig umgeben und in geeigneter Weise zwischen seitlichen Abdeckungen 10 kippbar angeordnet sind.

Zur Dämpfung der Wellenlageranordnung 1 dient ein Strömungsmitteldruckpolster 11, das sich in einem abgedichteten Baum zwischen der Innenfläche 12 des Lagergehäuses 4 und der oberen Mantelfläche 13 des Ringes 7 befindet. Im unteren Teil dieses Strömungsmitteldruckpolsters 11 liegt eine Federplatte 14, die das Rotorgewicht der elektrischen Maschine aufnimmt.

Weiterhin ist am Lagergehäuse 4 eine zusätzliche sekundäre elastische Abstützung 15 vorgesehen, die aus einem zweiten flexiblen Lagerträger gebildet ist, der ebenfalls aus einem Federkäfig, nämlich aus einem am Lagergehäuse 4 zweiten Ring 16 verbunden ist. Dieser zweite Ring 18 trägt an drei um 120° versetzten Stellen jeweils einen Gewindebolzen 19, der mit einer Gegenmutter 20 am Ring 18 gehalten ist und dessen über einen Stellvierkant 21 in der Höhe einstellbare abgerundete Kuppe 22 das Spiel 23 zwischen dem ersten federnden Lagerträger 5 und der zusätzichen sekundären elastischen Abstützung 15 begrenzt. Dieses Spiel 23 ist kleiner gewählt als der mögliche Federweg des Lagerträgers 5 ist.

Der erste federnd aufgehängte Lagerträger 5 ist für den unerregten Zustand der elektrischen Maschine optimal ausgelegt. Die zusätzliche sekundäre elastische Abstützung 15 ist dagegen in ihrer Auslegung für den erregten Zustand der Maschine optimiert. Das Spiel 23 zwischen dem Lagerträger 5 und der Abstützung 15 ist möglichst klein gewählt, nämlich so, daß es die Schwingungen bei unerregtem Zustand gerade nicht behindert, bei Erregung aber infolge des einseitigen statischen magnetischen Restzuges (aus natürlicher oder aus absichtlich eingestellter statischer Exzentrizität) schnell überbrückt wird und daß der Lagerträger 5 sich dann zusätzlich auch über die sekundäre Federung abstützt.

Die Steifigkeit der sekundären Dämpferfeder, die in den Fig. 1 und 2 durch eine symbolische austauschbare oder auch justierbare Zusatzfeder 24 angedeutet ist, ist so gewählt, daß die negative Wirkung des magnetischen Zuges optimal kompensiert wird, d. h. daß einerseits die Zusatzauslenkung infolge des einseitigen statischen magnetischen Bestzuges möglichst klein bleibt und andererseits eine möglichst optimale Dämpfungswirkung für den erregten Zustand erreicht wird.

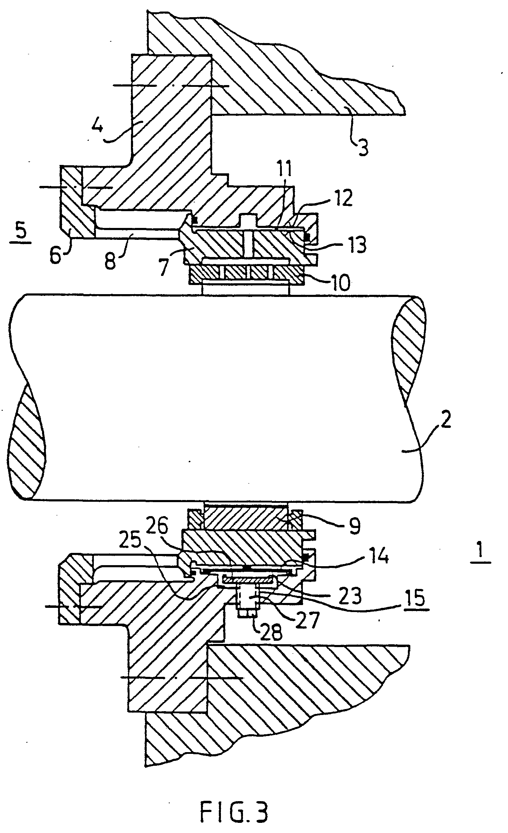

Bei dem in Fig. 3 dargestellten Ausführungsbeispiel wird die sekundäre Zusatzsteifigkeit durch Änderung der Stützbedingungen der das Rotorgewicht tragenden Federplatte 14 erreicht. Zu diesem Zweck im unten liegenden Bereich des Strömungsmitteldruckpolsters 11, in dem sich die Federplatte 14 befindet, im Lagergehäuse 4 eine erweiterte Aussparung 25 vorgesehen, in der ein sekundärer Stützteller 26 mittels eines Gewindebolzens 27 und einem Stellvierkant 28 in seiner Höhe verlagerbar ist. Der sekundäre Stützteller 26 bildet somit die zusätzliche sekundäre elastische Abstützung 15. Das Spiel 23, das sich jetzt zwischen dem sekundären Stützteller 26 und der Federplatte 14 befindet entspricht somit dem Spiel zwischen dem ersten beweglichen Lagerträger 5 und der sekundären elastischen Abstützung 15.

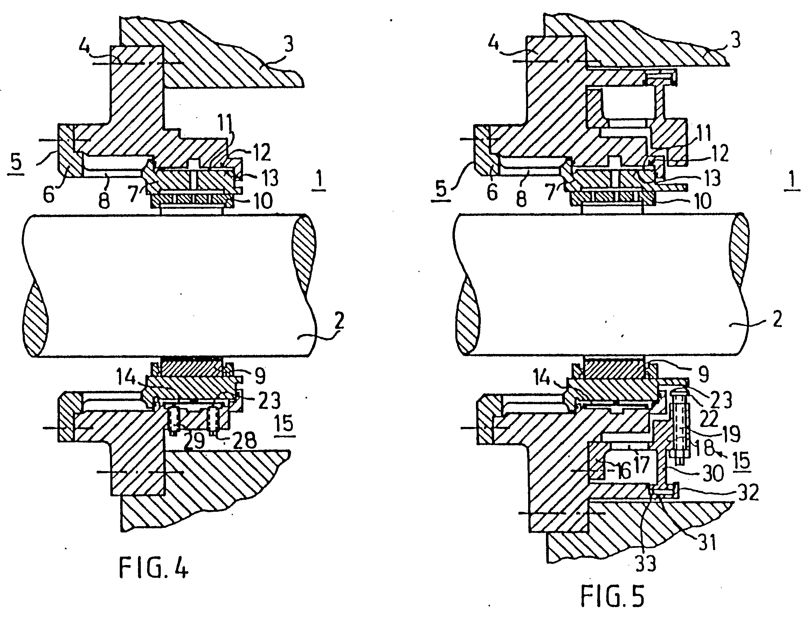

Bei dem Ausrührungsbeispiel nach Fig. 4 ist ebenfalls eine Änderung der Stützbedingungen für die Federplatte 14 vorgesehen. Dazu sind unterhalb der Federplatte 14 im Lagergehäuse 4 mehrere kräftige Gewindestifte 29 angeordnet, die ebenfalls einen Stellvierkant 28 aufweisen, der das Spiel 23 zwischen der Stirnfläche des Gewindebolzens 29 und der Federplatte 14 jeweils einstellbar macht.

Die Ausführungsbeispiele nach den Fig. 3 und 4, bei denen die zusätzliche sekundäre elastische Abstützung 15 jeweils nur an einer Stelle des Umfanges nämlich im unteren Bereich, in dem die das Gewicht des Rotors aufnehmende Federplatte 14 liegt angeordnet ist sind für Maschinensätze mit horizontaler Welle 2 geeignet, die lediglich in vertikaler Richtung unterschiedlichen Kraft- bzw. Federwirkungen ausgesetzt sind. Sie können dann mit Vorteil eingesetzt werden, wenn lediglich eine zu starke Exzentrizität des beweglichen Lagerträgers 5 im Strömungsmitteldruckpolster 11 infolge unterschiedlicher statischer vertikaler Kräfte vermieden werden soll.

Ein Ausführungsbeispiel ähnlich wie nach Figur 3 könnte aber auch für eine elektrische Maschine mit vertikaler Welle eingesetzt werden wenn der sekundäre Stützteller 26 an drei um 120° längs des Umfanges versetzten Stellen mit Spiel 23 zu dem ersten beweglichen Lagerträger 5 angeordnet werden würde. Dabei sollten um Gleitvorgänge zu verhindern, die sekundären federnden Stützteller eine geringe seitliche Beweglichkeit besitzen.

In Fig. 5 ist schließlich ein Ausführungsbeispiel gezeigt, das eine Abwandlung des Ausführungsbeispiels nach den Fig. 1 und 2 in dem Sinne darstellt daß eine weitere äußere Zusatzdämpfung vorgesehen ist. Hierzu ist der die zusätzliche sekundäre elastische Abstützung 15 bildende Federkäfig, der aus einem am Lagergehäuse 4 befestigten Ring 16 besteht, der über Stäbe 17 mit einem zweiten Ring 18 verbunden ist, und dessen Spiel 23 zum ersten beweglichen Lagerträger 5 über den Gewindebolzen 19 eingestellt wird, dahingehend abgewandelt, daß er mit einem Ansatz 30 versehen ist, der in eine Aussparung 31 eines Ansatzes 32 des Lagergehäuses 4 hineinragt. Da der Ansatz 30 gegenüber den Seitenwänden der Aussparung 31 abgedichtet ist, kann hier ein zweites Strömungsmitteldruckpolster 33 untergebracht sein. Dies ergibt eine weitere Anpassungsmöglichkeit der Wellenlageranordnung an bestimmte Betriebszustände.

## Patentansprüche

1. Flexible gedämpfte Wellenlageranordnung (1), insbesondere für elektrische Maschinen, mit einem die Welle (2) ringförmig umgebenden Lagergehäuse (4) und einem beweglichen Lagerträger (5), der das Wellenlager enthält und im Lagergehäuse (4) radial federnd aufgehängt ist, wobei zwischen dem Lagergehäuse (4) und dem Lagerträger (5) eine Ausnehmung für ein Strömungsmitteldruckpolster (11) verbleibt und eine zusätzliche elastische Abstützung (15) vorgesehen ist, dadurch gekennzeichnet, daß die zusätzliche Abstützung (15) als sekundäre Abstützung im Ruhezustand der gelagerten Maschine ein Spiel (23) zum Lagerträger (5) aufweist, das kleiner als der mögliche Federweg des Lagerträgers (5) ist, und daß die Ausnehmung für das Strömungsmitteldruckpolster (11) mit seitlichen Abdichtungen versehen ist.

2. Flexible gedämpfte Wellenlageranordnung nach Anspruch 1, dadurch gekennzeichnet daß das Spiel (23) zwischen dem beweglichen Lagerträger (5) und der sekundären Abstützung (15) einstellbar ist.

3. Flexible gedämfpte Wellenlageranordnung nach Anspruch 1, dadurch gekennzeichnet daß die Steifigkeit der sekundären Abstützung (15) einstellbar ist.

4. Flexible gedämpfte Wellenlageranordnung nach Anspruch 1, dadurch gekennzeichnet, daß auch zwischen der sekundären Abstützung (15) und dem Lagergehäuse (4) eine mit seitlichen Abdichtungen versehene Ausnehmung (31) für ein zweites Strömungsmitteldruckpolster (33) vorgesehen ist.

5. Flexible gedämpfte Wellenlageranordnung nach Anspruch 3, dadurch gekennzeichnet, daß als Federelement der sekundären Abstützung (15) ein Federkäfig (16, 17, 18) eingesetzt ist.

6. Flexible gedämpfte Wellenlageranordnung nach Anspruch 1, 2 oder 3, dadurch gekennzeichnet, daß die sekundäre Abstützung (15) in der Mittelebene des beweglichen Lagerträgers (5) angeordnet ist.

7. Flexible gedämpfte Wellenlageranordnung nach Anspruch 6, dadurch gekennzeichnet, daß die sekundäre Abstützung (15) unterhalb der das Gewicht aufnehmenden Federplatte (14) im Strömungsmitteldruckpolster (11) angeordnet ist.

## Claims

1. Elastic shaft bearing assembly (1) with damping, particularly for electrical machines, having a bearing housing (4) which encircles the shaft (2), and a moveable bearing holder (5) which contains the shaft bearing and is suspended in the bearing housing (4) radially on springs, with a recess being left for a flow medium pressure cushion (11) between the bearing housing (4) and the bearing holder (5), and an additional elastic supporting element (15) being provided, characterised in that the additional supporting element (15), as a secondary supporting element, has a clearance (23) to the bearing holder (5) in the resting state of the machine, which is less than the possible spring displacement of the bearing holder (5), and in that the recess for the flow medium pressure cushion (11) is provided with side seals.

2. Elastic shaft bearing assembly with damping according to claim 1, characterised in that the clearance (23) between the moveable bearing holder (5) and the secondary supporting element (15) can be adjusted.

3. Elastic shaft bearing assembly with damping according to claim 1, characterised in that the rigidity of the secondary supporting element (15) can be adjusted.

4. Elastic shaft bearing assembly with damping according to claim 1, characterised in that an opening (31) with side seals is also provided for a second flow medium pressure cushion (33), between the secondary supporting element (15) and the bearing housing (4).

5. Elastic shaft bearing assembly with damping according to claim 3, characterised in that a spring cage (16, 17, 18) is used as the spring element of the secondary supporting element (15).

6. Elastic shaft bearing assembly with damping according to claim 1, 2 or 3, characterised in that the secondary supporting element (15) is arranged in the median plane of the moveable bearing holder (5).

7. Elastic shaft bearing assembly with damping according to claim 6, characterised in that the secondary supporting element (15) is arranged, in the current medium pressure cushion (11), beneath the spring plate (14) which takes the weight.

**Revendications**

1. Agencement pour un palier d'arbre (1), du type flexible et amorti, en particulier pour des machines électriques, avec un logement de palier (4) entourant de façon annulaire l'arbre (2), et avec un support de palier mobile (5) qui contient le palier et qui est suspendu avec élasticité radiale dans le logement du palier (4), une ouverture pour un coussin de pression (11) pour un milieu d'écoulement subsistant entre le logement du palier (4) et le support de palier (5), et un appui élastique supplémentaire (15) étant prévu, caractérisé par le fait que l'appui supplémentaire (15), servant d'appui secondaire, présente, à l'état de repos de la machine montée dans ses paliers, un jeu (23) par rapport au support de palier (5), qui est inférieur à la course élastique possible du support de palier (5), et que l'ouverture pour le coussin de pression (11) pour le milieu d'écoulement est pourvu de moyens d'étanchéité latéraux.

2. Agencement pour un palier d'arbre du type flexible et amorti selon la revendication 1, caractérisé par le fait que le jeu (23) entre le support de palier mobile (5) et l'appui secondaire (15) est réglable.

3. Agencement pour un palier d'arbre du type flexible et amorti selon la revendication 1, caractérisé par le fait que la rigidité de l'appui secondaire (15) est réglable.

4. Agencement pour un palier d'arbre du type flexible et amorti selon la revendication 1, caractérisé par le fait qu'il est également prévu entre l'appui secondaire (15) et le logement du palier (4), une ouverture (31) pour un second coussin de pression (33) pour le milieu d'écoulement et qui est pourvue de moyens d'étanchéité latéraux.

5. Agencement pour un palier d'arbre du type flexible et amorti selon la revendication 3, caractérisé par le fait que, comme élément élastique de l'appui secondaire (15), il est fait usage d'une cage élastique (16, 17, 18).

6. Agencement pour un palier d'arbre du type flexible et amorti selon la revendication 1, 2 ou 3, caractérisé par le fait que l'appui secondaire (15) est disposé dans le plan médian du support de palier mobile (5).

7. Agencement pour un palier d'arbre du type flexible et amorti selon la revendication 6, caractérisé par le fait que l'appui secondaire (15) est disposé en-dessous de la plaque élastique absorbant le poids, dans le coussin de pression (11) du milieu d'écoulement.

FIG.1

FIG.2

EP 0 134 749 B1

FIG.3

FIG.4

FIG.5

EP 0 134 749 B1